# EUROPEAN PATENT APPLICATION

(11) **EP 1 078 884 A2**
(43) Date of publication of application: **28.02.2001**
(21) Application number: 00307116.4
(22) Date of filing: 18.08.2000
(51) Int. Cl.: C02F 1/54

(54) **Manufacturing process for quaternary ammonium tannate, a vegetable coagulating/flocculating agent**

(30) Priority: 27.08.1999 BR 9904021
(71) Applicant: Tanac S.A., 95780-000 Montenegro, RS (BR)
(72) Inventor: Lamb, Luiz Henrique, 95840-000 Triunfo, RS (BR); Decusati, Otávio Guimares, 95780-000 Montenegro, RS (BR)
(74) Representative: Daniels, Jeffrey Nicholas

(57) **Abstract**

Provided is a process for preparing a flocculating agent comprising: a) mixing a set of reagents comprising an aliphatic aldehyde and a salt containing an associated ammonia radical, in an aqueous medium; b) reacting by heating the mixture obtained in (a) until a substantially colorless liquid is obtained; c) optionally adding a strong mineral acid so as to arrive at a final pH of between 1 and 3, and d) reacting the liquid obtained in (b) or (c) with an aqueous tannin solution, under stirring.

## Description

For many years the processes for purifying and clarifying water, for various applications including human consumption, have been performed using inorganic salts, mainly aluminium and iron salts, acting as impurity coagulating and flocculating agents.

We have now verified the possibility of treating drinking water, water for industrial uses, for boilers and cooling towers, of treating industrial effluents in general as well as domestic sewage, by using a synthetic coagulation/flocculating agent with organic and vegetable properties. The basic raw material for the production of this agent is pyrochatechin tannin, aqueous extract of Acacia mearnsii bark and it has cationic properties.

The object of the present invention is the development of a vegetable polyelectrolyte cation which may be obtained from vegetable tannin extract, flavan 3,4-diol. Without being bound by theory, it is believed that the tannin extract acts as a nucleophile in the face of an electrophilic system. The electrophilic system may be obtained by the reaction of an aldehyde, such as p-formaldehyde, formaldehyde or furfuraldehyde, with primary, secondary or tertiary amine such as methylamine, ethylamine, monoethanolamine, diethanolamine, or ammonium hydroxide. The amine compound may be generated on site by the reaction of said aldehyde and a salt which can be ammonium chloride, among others.

Therefore, the present provides a process for preparing a flocculating agent comprising:
a) mixing a set of reagents comprising an aliphatic aldehyde and a salt containing an associated ammonia radical, in an aqueous medium;
b) reacting by heating the mixture obtained in (a) until a substantially colorless liquid is obtained;
c) optionally adding a strong mineral acid so as to arrive at a final pH of between 1 and 3, and
d) reacting the liquid obtained in (b) or (c) with an aqueous tannin solution, under stirring.

A highly viscous syrupy liquid is obtained that can be used as it is or else atomized at temperatures in the 170° to 240°C range, thereby being transformed into a uniformly grained powder.

This process is based on the Mannich reaction.

The Mannich reaction foresees the use of an aldehyde, an amine and a compound of acid properties. In this process, the ammonium salt reacts initially with the aldehyde through acid catalysis, giving rise to a complex mixture of mainly primary and secondary amines. Then this mixture reacts with the aromatic tannin chains, likewise under acid catalysis, resulting in the product that is the object of the present invention, a quaternary ammonium tannate, possessing coagulating/flocculating activity.

Among the properties of the coagulating/flocculating agents produced according to the present invention that make them different from the traditionally used products are their capacity to create chelates with the metals dissolved in the water. These chelates immobilize the metals next to the coagulation/flocculating agent, causing them to settle and be removed together with the generated sludge. This feature is especially efficient when removing ferrous ions present in the water, completely removing this contaminant.

Another important feature is the broad pH range over which the flocculating agents produced according to the present invention are active, in contrast to the metallic salts normally used, which require a fairly narrow pH range of action. The fundamental difference of the present invention is that the cationic coagulation/flocculation agent of vegetable origin does not need to hydrolyse with the environment to neutralize the charges of the colloidal matter in the water. Thus the pH of the water is not altered, and so alkalinising agents are not required to correct the pH.

Thus the preparation process for quaternary ammonium tannate, the coagulating/flocculating agent, is based on the Mannich reaction and uses the following set of reagents:
1- Vegetable tannin that is chemically a phenolic polymer, whose monomeric structure is flavin-3-ol;
2- An aliphatic aldehyde;
3- A mineral acid catalyst;
4- An ammonium salt

Step (a) is preferably carried out at a temperature not greater than 45°C. The reagents may suitably be mixed in a reaction vat at atmospheric pressure.

Step (b) is preferably carried out at a temperature of 60°C to 75°C for 3 to 9 hours.

Step (d) is preferably carried out at a temperature of 45°C to 97°C for not less than 5 hours.

Tannin is normally used in the 44° to 56° % weight range.

The preferred aliphatic aldehyde is formalin and is used in the 28% to 38% weight range.

The most commonly used ammonium salt is ammonium chloride, in the 17% to 32% weight range.

The preferred acid catalyst is hydrochloric acid and it is used in the 5% to 18% weight range.

The invention will be better understood by the following non-limiting examples.

### Example 1.

In a closed stainless steel reactor, with capacity for 10 liters, adequately sealed, provided with a thermometer, a stirring system, heat and cooling sources, stir together 2,398g of 37% stabilized formalin, 580 g of ammonium chlorate, add 330 g of commercial hydrochloric acid. The mixture is heated while stirring to a temperature of 65°C during 5 hours. After that time the tannin in liquid form is added, 2,980 g with 40% solids, and stirring is continued for 8 hours. After that it is left to cool. The product so obtained can be atomized and has a syrupy appearance with 36% of active material, density of 1.15 and a pH between 1.0 and 2.2. The sequence in which the reagents are added is critical.

### Example 2.

In a similar kind of equipment, add 3,190 g of tannin in liquid form with 49% of overall solids, while stirring, 2,450 g of 37% stabilized formalin, 450 g of ammonium chloride and 320 g of commercial hydrochloric acid, plus catalytic functions, done gradually and slowly, being critical. The mixture is heated for 5 hours to a temperature in the 75°C to 80°C range. After that, it is left to cool. The obtained product can likewise be atomized. It contains 40% of active material, a pH in the 1.2 to 2.4 range, and viscosity of 30 seconds in a No. 4 Ford cup.

The resulting product has the generic chemical structure shown below. 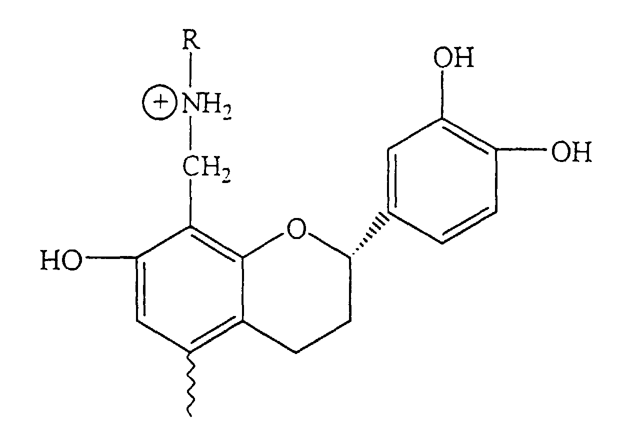 Quaternary Ammonium Tannate.

## Claims

1. A process for preparing a flocculating agent comprising:
a) mixing a set of reagents comprising an aliphatic aldehyde and a salt containing an associated ammonia radical, in an aqueous medium;
b) reacting by heating the mixture obtained in (a) until a substantially colorless liquid is obtained;
c) optionally adding a strong mineral acid so as to arrive at a final pH of between 1 and 3, and
d) reacting the liquid obtained in (b) or (c) with an aqueous tannin solution, under stirring.

2. A process according to claim 1, wherein step (a) is carried at a temperature not greater than 45°C.

3. A process according to claim 1 or claim 2, wherein step (b) is carried out at a temperature of 60°C to 75°C for 3 to 9 hours.

4. A process according to any previous claim, wherein step (d) is carried out at a temperature of 45°C to 97°C for not less than 5 hours.

5. A process according to any preceding claim, wherein the acid is hydrochloric acid.

6. A process according to any preceding claim, wherein the mixture comprises 5-18% by weight of the acid.

7. A process according to any preceding claim, wherein a high viscosity liquid is obtained which is capable of use as a flocculating agent.

8. A process according to any preceding claim, comprising the further step of atomising the liquid obtained in (d) at a temperature of 170°C to 240°C to produce a substantially uniformly grained powder.

9. A process according to any preceding claim, wherein the aliphatic aldehyde is formalin.

10. A process according to claim 9, wherein the mixture comprises 28% to 38% by weight of formalin.

11. A process according to any preceding claim, wherein the salt is ammonium chloride.

12. A process according to claim 11, wherein the mixture comprises 17% to 32% by weight of ammonium chloride.

13. A process according to any preceding claim, wherein the aqueous tannin solution contains a vegetable tannin comprising a phenolic polymer, of which the monomeric structure is flavin-3-ol.

14. A process according to claim 13, wherein the mixture comprises 44% to 56% by weight of the vegetable tannin.
